# EUROPEAN PATENT SPECIFICATION

(11) **EP 2 799 203 B1**
(45) Date of publication and mention of the grant of the patent: **17.05.2017**
(21) Application number: 13178486.0
(22) Date of filing: 30.07.2013
(51) Int. Cl.: B29C 44/04, B29C 44/12, B29L 31/30, B29C 37/00

(54) **Methods for producing bicycle saddles**
Verfahren zur Herstellung von Fahrradsätteln
Procédés de production de selles de bicyclette

(30) Priority: 30.04.2013 TW 102115518; 10.07.2013 TW 102124765
(43) Date of publication of application: 05.11.2014
(73) Proprietor: Velo Enterprise Co., Ltd., Dajia Dist., Taichung City 437 Chinese Taipei (CN)
(72) Inventor: Yu, Tsai-Yun, 437 TAICHUNG CITY (TW)
(74) Representative: Becker Kurig Straus

(56) References cited:
- EP-A1- 0 653 279
- WO-A1-2007/115396
- JP-A- S58 110 225
- US-B2- 8 236 218

## Description

### BACKGROUND OF THE INVENTION

### 1. Field of the invention

The present invention relates to bicycle saddles, and particularly relates to a method for producing such saddles.

### 2. Description of the Prior Art

It is well known that typical bicycle saddles generally comprise a shell made of rigid or semirigid material, a filler made of a resilient material and a cover designed to contact a bicycle user. For producing such conventional saddles, the methods, as disclosed in U.S Pat.No.5,904,396 and No.8,236,218, usually use a pre-formed sheet element made of fabric, leather, imitation leather or the like to be the cover of the saddles. Further speaking, the prior art methods for producing the conventional saddles most often firstly dispose a pre-formed sheet element on a female portion of a mold as the cover, and then pour resin or the like on the upper surface of the sheet element for forming the filler associated with the cover.

JP 58-110225 discloses a method for manufacturing a motor cycle saddle. The method comprises the steps of opening the mold; Laying an urethane hardening resin liquid on a surface of a female part of the mold; curing the resin liquid to form a high-molecule urethane elastomer skin; applying a preformed metal core plate on the male part of the mold; laying a foaming urethane resin liquid on the skin; closing the mold and foaming the foaming urethane resin liquid; curing the foaming urethane resin liquid; and opening the mold.

The saddles made of the prior art methods have generally an apparent disadvantage that for being pre-formed, the cover can't be bonded tightly with the after-molded filler. And the result is that the cover is easily removed from the filler. Furthermore, there needs many and diverse working procedures, such as, applying, stretching and anchoring procedures, to dispose the pre-formed sheet element on the female portion of the mold so that the labor is consumed and the cost is expensive.

### SUMMARY OF THE INVENTION

The object of the present invention is to overcome the above mentioned drawbacks, by providing a method for producing bicycle saddles that allows the cover and the filler being tightly bonded together.

Another object is to provide a method that allows to minimize product fabrication time and costs.

These and other objects, as better explained hereafter, are achieved by a method for producing a bicycle saddle which at least includes a cover, a rigid or semi-rigid shell and a filler disposed between the cover and the shell. The method is carried out by a mold which includes an upper and lower parts being pin-jointed together for removing between an open position and a closed position. The upper part of the mold has a male portion and the lower part has a female portion opposed to the male portion. The method according to the present invention comprises the following steps:
preheating the mold to a temperature in a range of about 30°C and about 60°C; opening the mold to the open position; treating a layer of release agent onto the surface of the male portion of the upper part and the surface of the female portion of the lower part; spraying a first layer of a first plastic material made of non-foamable polyurethane composition onto the surface of the female portion of the lower part treated with the layer of release agent to form a cover; detachably coupling a shell made of semi-rigid or rigid materials to the male portion of the upper part of the mold; pouring a second layer of a second plastic material made of non-foamable polyurethane composition onto the female portion of the lower part of the mold; closing the mold to the closed position and maintaining the mold in the closed position a period of time to allow the first layer forming the cover and the second layer forming the filler bonded with the shell and the cover; and opening the mold to remove the finished saddle. According to the present invention there is an elapsing time between the end of the step of spraying of said first plastic material and the beginning of the step of pouring of said second plastic material.

Advantageously, the method further comprises a step of spraying a color layer of a pigment material onto the layer of release agent before the first layer is applied thereonto.

The elapsing time between the end of the spraying step of the first layer and the beginning of the pouring step of the second layer is for getting a fine bonded condition between the first layer and the second layer.

### BRIEF DESCRIPTION OF THE DRAWINGS

Further features and advantages of the invention will be more apparent from the detailed description of the embodiments according to the present invention, with reference to the accompanying drawings, wherein:
FIG. 1 is a perspective view of a bicycle saddle produced by a method according to one aspect of the present invention;
FIG. 2 is a sectional view of the saddle of FIG. 1, as taken along a line 2-2;
FIGS.3 and 4 show various steps of the method for producing the saddle of FIG. 1; and
FIG. 5 is a schematic sectional view, taken along a vertical plane, of a mold when performing one of the steps of the method according to the present invention for producing the saddle of FIG.1.

### DESCRIPTION OF A PREFERRED EMBODIMENT OF THE PRESENT INVENTION

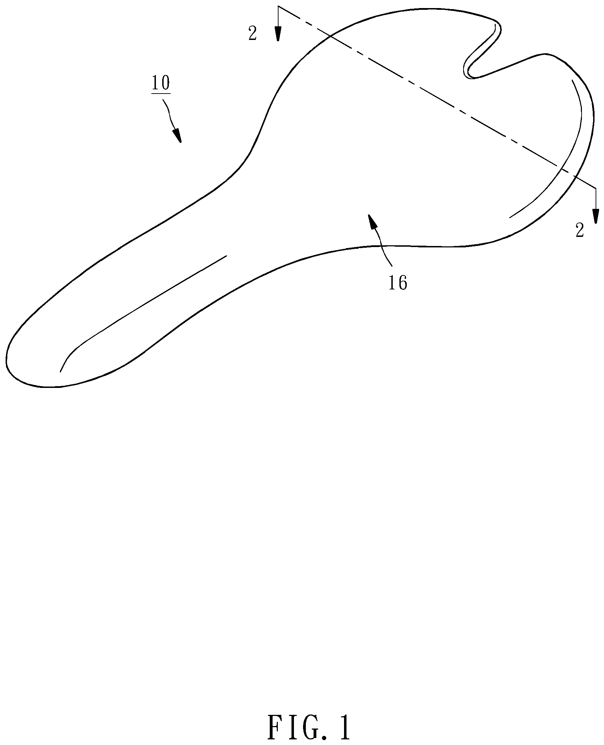

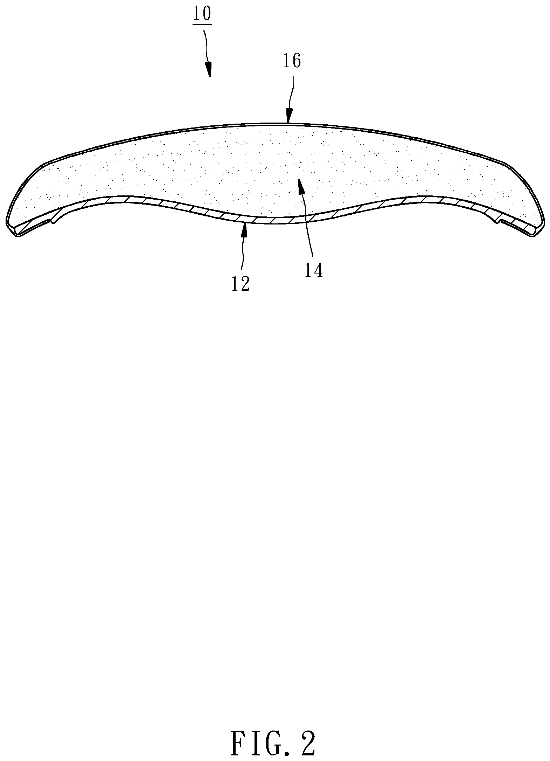

Referring firstly to FIGS. 1 and 2, the saddle 10 is produced by a method according to a preferred embodiment of the present invention. The saddle (10) includes a shell (12), a filler (14) and a cover (16).

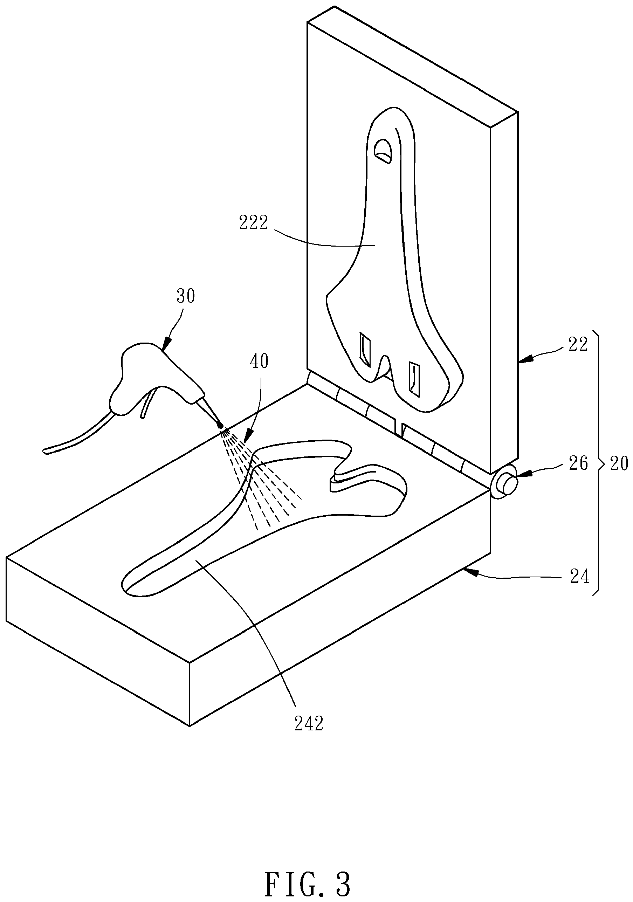

The steps of the method for producing the saddle (10) are schematically shown in FIGS. 3 to 5.

The method advantageously carries out using a mold (20) having an upper part (22) and a lower part (24), which are pin-jointed together by means (26) for being removable between an open position and a closed position. The upper part (22) has a male portion (222) and the lower part (24) has a female portion (242) opposed to the male portion (222) for defining a cavity therebetween as the mold 10 is closed.

The following is the detailed description of the steps of the method for producing the saddle (10).

As a first step, the mold (20) is previously heated to a temperature in a range of about 30°C. and about 60°C, preferably to 45°C. The mold 20 is then opened to the open position and a release agent, such as silicone emulsion, is treated, by a suitable way, such as spray-coating, onto the surface of the male portion (222) and the surface of the female portion (242) to form a layer of release agent.

Then, the cover (16) is formed, by spraying a first layer of a first plastic material (40) onto the surface of the female portion (242) of the lower part (24). Detailedly speaking, as shown in FIG. 3, following the step of treating onto the surface of the female portion (242) the layer of release agent, a first plastic material (40), made of a nonfoamable polyurethane composition, is sprayed onto the surface of the female portion (242) having the layer of release agent treated thereon by a spraying equipment (30) to form the cover (16). In this embodiment, the operating temperature of the first plastic material (40) is kept in a range of about 65°Cand about 75°C, preferably in 70°C. The desired sprayed amount of the first plastic material (40) is controlled in such a way that can keep the thickness of the cover (16) in a range of about 07mm and about 1.2mm for providing a better protection to the filler (14) and a more comfortable feeling to bicycle riders.

Alternatively, in another embodiment, the cover (16) may be applied a color layer thereon by a step of spraying a color layer of a pigment material onto the layer of release agent before the first layer is applied thereonto. The pigment material can be a polyurethane composition with a pre-selected color.

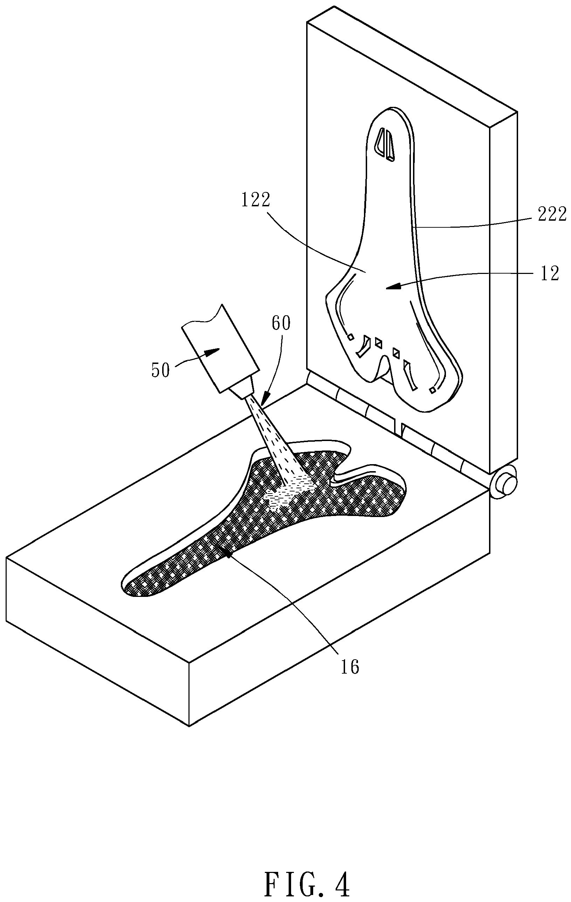

Now, the following step is to couple the frame (12) on the male portion (222) of the upper part (22) of the mold (20) in such a way that the inner surface (122) of the frame (12) is faced to the female portion (242) of the lower part (24) of the mold (20). Then, a second plastic material (60) made of a foamable polyurethane composition is poured into the female portion (242) having the first layer being applied thereon by a suitable apparatus (50), as shown in FIG.4. To facilitate the bonded state between the cover (16), the filler (14) and the frame (12), there needs an elapsing time between the end of the step of spraying the first plastic material (40) and the beginning of the step of pouring of the second plastic material (60). The elapsing time may be about 60 seconds to about 90 seconds, preferably 75 seconds.

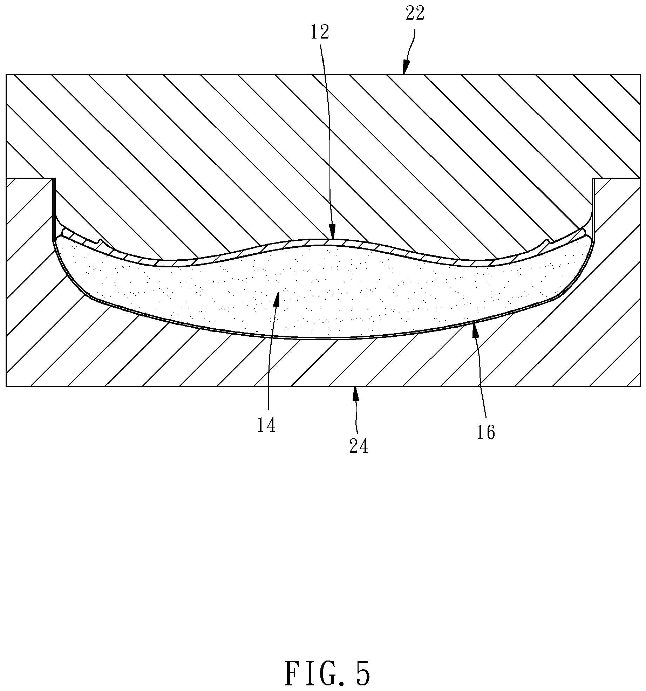

Once the second plastic material (60) is poured into the female portion (242), the mold (20) is closed and held in the closed position for a period of time, which may be of 4 min to 8 min, so that the filler (14) is formed between the cover (16) and the frame (12), as shown in FIG. 5. After this time, the mold (20) is then opened to remove the finished saddle (10) therefrom, as shown in FIG.1.

## Claims

1. A method for producing a bicycle saddle (10) including a cover (16), a rigid or semi-rigid shell (12) and a filler (14) disposed between said cover (16) and said shell (12), employing a mold (20) having an upper part (22) and a lower part (24), said upper part (220) and said lower part (24) being pin-jointed together to be removable between an open position and a closed position, said upper part (22) having a male portion (222) and said lower part (24) having a female portion (242) opposed to said male portion (222); said method comprising the steps of:
preheating said mold (20) to a temperature in a range of about 30°C and about 60°C;
opening said mold (20) to said open position;
treating a layer of release agent onto the surface of said male portion (222) of said upper part (22) and the surface of said female portion (242) of said lower part (24);
spraying a first layer of a first plastic material (40) made of non-foamable polyurethane composition onto the surface of said female portion (242) of said lower part (24) treated with said layer of release agent to form a cover (16);
detachably coupling a shell (12) made of semi-rigid or rigid materials to said male portion (222) of said upper part (22) of said mold (20);
pouring a second layer of a second plastic material (60) made of foamable polyurethane composition onto said female portion (242) of said lower part (24) of said mold (20);
closing said mold (20) to said closed position and holding said mold in the closed condition a period of time to allow said second layer forming a filler (14) between said shell (12) and said cover (16) formed by said first layer; and
opening said mold (20) to remove the finished saddle (10) therefrom,
wherein there is an elapsing time between the end of the step of spraying of said first plastic material (40) and the beginning of the step of pouring of said second plastic material (60).

2. The method as claimed in claim 1, further comprising a step of spraying a color layer of a pigment material onto said layer of release agent.

3. The method as claimed in claim 1, wherein said release agent is a silicone emulsion release agent.

4. The method as claimed in claim 1, wherein the operating temperature of the first plastic material (40) is kept in a range of about 65°C and about 75°C.

5. The method as claimed in claim 1, wherein said cover (16) formed by said first plastic material (40) has a thickness in a range of about 0.7mm and about 1.2mm.

6. The method as claimed in claim 1, wherein said elapsing time is in a range of about 60 seconds and about 90 seconds.

## Patentansprüche

1. Verfahren zur Herstellung eines Fahrradsattels (10) mit einer Abdeckung (16), einer festen oder halb-festen Hülle (12) und einem Füllmaterial (14), das zwischen der Abdeckung (16) und der Hülle (12) angeordnet ist, wobei eine Gußform (20) eingesetzt wird, welche ein oberes Teil (22) und ein unteres Teil (24) aufweist, wobei das obere Teil (220) und das untere Teil (24) an einer Stelle miteinander verbunden sind, um zwischen einer offenen Position und einer geschlossenen Position bewegbar zu sein, wobei das obere Teil (22) einen vorspringenden Bereich (222) und das untere Teil (24) einen aufnehmenden Bereich (242) gegenüber dem vorspringenden Bereich (222) aufweist;
wobei das Verfahren die Schritte umfasst:
Vorheizen der Gußform (20) auf eine Temperatur in einem Bereich von etwa 30°C und etwa 60°C;
Öffnen der Gußform (20) in die offene Position;
Auftragen einer Schicht eines Lösemittels auf die Oberfläche des vorspringenden Bereichs (222) des oberen Teils (22) und der Oberfläche des aufnehmenden Bereichs (242) des unteren Teils (24);
Sprühen einer ersten Schicht eines ersten Kunststoffmaterials (40) aus einer nichtschäumbaren Polyurethan-Zusammensetzung auf die Oberfläche des aufnehmenden Bereichs (242) des unteren Teils (24), auf das die Schicht eines Löse-Mittels aufgetragen wurde, zur Bildung einer Abdeckung (16);
abnehmbar Kuppeln einer Hülle (12) aus halb-festem oder festen Materialien auf den vorspringenden Bereich (222) des oberen Teils (22) der Gußform (20);
Gießen einer zweiten Schicht eines zweiten Kunststoffmaterials (60) aus einer schäumbaren Polyurethan-Zusammensetzung auf den aufnehmenden Bereich (242) des unteren Teils (24) der Gußform (20);
Schließen der Gußform (20) in die geschlossene Position und Halten der Gußform in dem geschlossenen Zustand für eine Zeitspanne, so dass die zweite Schicht einen Füllstoff (14) zwischen der Hülle (12) und der durch die erste Schicht gebildeten Abdeckung (16) ausbilden kann; und
Öffnen der Gußform (20), um den fertig gestellten Sattel (10) daraus zu entnehmen,
worin zwischen dem Ende des Sprüh-Schritts des ersten Kunststoffmaterials (40) und dem Beginn des Gießschritts des zweiten Kunststoffmaterials (60) eine Ablaufzeit liegt.

2. Verfahren nach Anspruch 1, welches weiter einen Sprüh-Schritt einer Farb-Schicht eines pigmentierten Materials auf die Schicht des Löse-Mittels umfasst.

3. Verfahren nach Anspruch 1, wobei das Löse-Mittel ein Silikon-Emulsions-Löse-Mittel ist.

4. Verfahren nach Anspruch 1, wobei die Betriebstemperatur des ersten Kunststoffmaterials (40) in einem Bereich von etwa 65°C und etwa 75°C gehalten wird.

5. Verfahren nach Anspruch 1, worin die aus dem ersten Kunststoffmaterial (40) gebildete Abdeckung (16) eine Dicke im Bereich von etwa 0,7mm und etwa 1,2mm aufweist.

6. Verfahren nach Anspruch 1, wobei die Ablaufzeit in einem Bereich von etwa 60 Sekunden und etwa 90 Sekunden liegt.

## Revendications

1. Procédé de production d'une selle de bicyclette (10) comprenant un couvercle (16), une coque rigide ou semi-rigide (12) et une charge (14) disposée entre ledit couvercle (16) et ladite coque (12), utilisant un moule (20) ayant une partie supérieure (22) et une partie inférieure (24), ladite partie supérieure (220) et ladite partie inférieure (24) étant articulées ensemble pour être amovibles entre une position ouverte et une position fermée, ladite partie supérieure (22) ayant une partie mâle (222) et ladite partie inférieure (24) ayant une partie femelle (242) opposée à ladite partie mâle (222); ledit procédé comprenant les étapes de :
préchauffage dudit moule (10) à une température dans une plage d'environ 30°C et d'environ 60°C;
ouverture dudit moule (10) dans ladite position ouverte;
traitement d'une couche d'agent de démoulage sur la surface de ladite partie mâle (222) de ladite partie supérieure (22) et sur la surface de ladite partie femelle (242) de ladite partie inférieure (24);
pulvérisation d'une première couche d'une première matière plastique (40) en une composition de polyuréthane non moussable sur la surface de ladite partie femelle (242) de ladite partie inférieure (24) traitée avec ladite couche d'agent de démoulage afin de former un couvercle (16);
couplage de façon amovible d'une coque (12) en matériaux semi-rigides ou rigides à ladite partie mâle (222) de ladite partie supérieure (22) dudit moule (20);
déversement d'une seconde couche d'une seconde matière plastique (60) en une composition de polyuréthane moussable sur ladite partie femelle (242) de ladite partie inférieure (24) dudit moule (20);
fermeture dudit moule (20) dans ladite position fermée et maintient dudit moule dans l'état fermé pendant une période de temps afin de permettre à ladite seconde couche de former une charge (14) entre ladite coque (12) et ledit couvercle (16) formé par ladite première couche ; et
ouverture dudit moule (20) pour retirer la selle finie (10) à partir de celui-ci,
dans lequel un certain temps s'écoule entre la fin de l'étape de pulvérisation de ladite première matière plastique (40) et le début de l'étape de déversement de ladite seconde matière plastique (60).

2. Procédé selon la revendication 1, comprenant en outre une étape de pulvérisation d'une couche colorée d'un matériau pigmentaire sur ladite couche d'agent de démoulage.

3. Procédé selon la revendication 1, dans lequel ledit agent de démoulage est un agent de démoulage de type émulsion de silicone.

4. Procédé selon la revendication 1, dans lequel la température de fonctionnement de la première matière plastique (40) est maintenue dans une plage d'environ 65°C et environ 75°C.

5. Procédé selon la revendication 1, dans lequel ledit couvercle (16) formé par ladite première matière plastique (40) présente une épaisseur dans une plage d'environ 0,7 mm et environ 1.2mm.

6. Procédé selon la revendication 1, dans lequel ledit temps qui s'écoule est situé dans une plage d'environ 60 secondes et environ 90 secondes.
